# DEMANDE DE BREVET EUROPEEN

(11) **EP 1 249 368 A1**
(43) Date de publication de la demande: **16.10.2002**
(21) Numéro de dépôt: 02290849.5
(22) Date de dépôt: 05.04.2002
(51) Int. Cl.: B60R 11/02

(54) **Système audio embarqué pour véhicule automobile**

(30) Priorité: 09.04.2001 FR 0104816
(71) Demandeur: Renault s.a.s., 92100 Boulogne Billancourt (FR)
(72) Inventeur: Leray, Fabrice, 75015 Paris (FR)

(57) **Abrégé**

Le système audio embarqué comporte un dispositif central DSC de type autoradio disposé au voisinage de la place conducteur et incorporant en outre un lecteur/enregistreur capable de traiter des fichiers audio comprimés au format MP3, ainsi que plusieurs lecteurs périphériques LPi capables de traiter des fichiers audio comprimés au format MP3, coopérant avec le dispositif central et disposés à des endroits prédéterminés dans le véhicule au voisinage des places passager.

## Description

L'invention concerne des systèmes audio embarqués pour véhicules automobiles.

Aujourd'hui, il est intéressant d'offrir un maximum d'habitabilité pour le conducteur et ses passagers, avec de plus en plus de prestations.

Or, ceci est d'autant plus difficile aujourd'hui avec l'intégration de plus en plus d'équipements dans le véhicule, notamment derrière la planche de bord, qui devient très chargée. Ainsi, l'autoradio habituel représente un volume conséquent au sein de cette planche de bord, sans parler du chargeur de disques audio (CD-ROM) placé sous le siège du passager ou dans le coffre du véhicule.

Par ailleurs, de tels systèmes audio embarqués ne permettent d'offrir au conducteur et aux passagers qu'un nombre limité de morceaux de musique.

L'invention vise à remédier à ces inconvénients.

Un but de l'invention est de proposer une personnalisation de l'habitacle, chaque occupant du véhicule pouvant écouter les musiques qu'il désire et voyager tranquillement sans être importuné par les goûts musicaux de ces voisins.

L'invention a également pour but de proposer un plus grand nombre de musiques disponibles dans le véhicule.

L'invention propose donc un système audio embarqué pour véhicule automobile, comportant un dispositif central de type autoradio disposé au voisinage de la place conducteur et incorporant en outre un lecteur/enregistreur capable de traiter des fichiers audio comprimés au format MP3, ainsi que plusieurs lecteurs périphériques capables de traiter des fichiers audio comprimés au format MP3, coopérant avec le dispositif central et disposés à des endroits prédéterminés dans le véhicule au voisinage des places passagers.

Selon un mode de réalisation de l'invention, le lecteur/enregistreur du dispositif central comporte :
- une première interface d'entrée, par exemple une connexion Internet directe dans le cas d'un véhicule multimédia, ou bien une entrée pour recevoir une carte-mémoire, capable de recevoir les fichiers numériques comprimés au format MP3 correspondant à des morceaux musicaux,
- un moyen de mémoire central capable de stocker les différents fichiers numériques délivrés par ladite première interface d'entrée,
- un clavier numérique et un écran, et des moyens de restitution sonore, par exemple des haut-parleurs,
- plusieurs interfaces auxiliaires respectivement reliées aux différents lecteurs périphériques, et
- des moyens de traitement connectés à la première interface d'entrée, aux différentes interfaces auxiliaires, au moyen de mémoire central, à l'écran, au clavier, et aux moyens de restitution sonore, ces moyens de traitement comportant des moyens de décompression de fichier.

Par ailleurs, chaque lecteur périphérique comporte unc interface périphérique coopérant avec l'interface auxiliaire correspondante, un clavier numérique, un écran, un moyen de mémoire capable de stocker des morceaux musicaux en format MP3, une interface de restitution sonore avec le passager correspondant, par exemple des oreillettes, et un bloc de traitement capable de coopérer avec les différents éléments précités du périphérique, ce bloc de traitement comportant des moyens de décompression.

Les lecteurs périphériques peuvent être destinés à être incorporés dans les garnitures des portes passagers. Ceci étant, pour plus de sécurité, en cas d'ouverture brusque de la portière, chaque lecteur périphérique peut être destiné à être incorporé dans le plafond du véhicule situé juste au-dessus du passager.

En variante, les lecteurs périphériques associés aux passagers arrière du véhicule peuvent être destinés à être incorporés dans les sièges du conducteur et du passager avant.

Par ailleurs, les lecteurs périphériques peuvent être amovibles, et utilisés alors comme baladeurs. Dans ce cas, ils comportent avantageusement un dispositif de sécurité, par exemple une clé électromagnétique, verrouillant le lecteur dans son logement tant que le contact moteur n'est pas mis.

D'autres avantages et caractéristiques de l'invention apparaîtront à l'examen de la description détaillée de modes de réalisation, nullement limitatifs, et des dessins annexés, sur lesquels :
- la figure 1 illustre schématiquement un véhicule selon l'invention équipé d'un système audio embarqué selon l'invention;
- la figure 2 illustre plus en détail mais toujours schématiquement l'architecture interne d'un système audio embarqué selon l'invention; et
- la figure 3 illustre plus particulièrement la localisation d'un lecteur périphérique dans le véhicule.

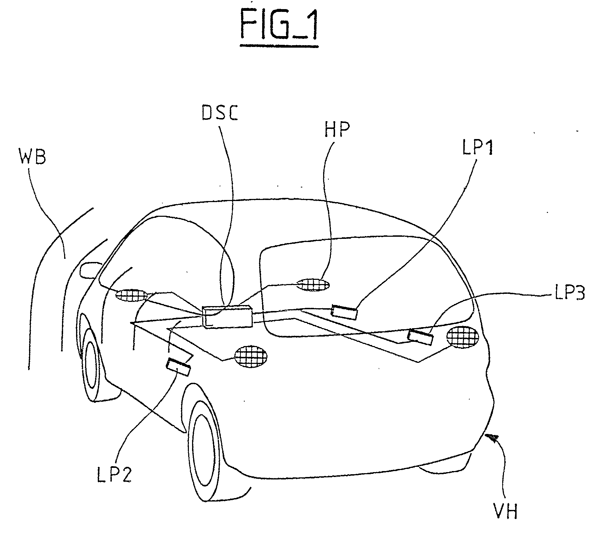

Sur la figure 1, la référence VH désigne un véhicule équipé d'un système audio embarqué de type MP3.

Plus particulièrement, ce système comporte un dispositif central DSC relié à des haut-parleurs HP et également relié à des lecteurs LPi périphériques audio de type MP3 (trois lecteurs LP1-LP3 sont représentés sur la figure 1).

Par ailleurs, le véhicule de la figure 1 est un véhicule multimédia équipé d'une connexion Internet directe WB qui permet de recevoir différentes sélections musicales, au format MP3, téléchargées par les occupants du véhicule.

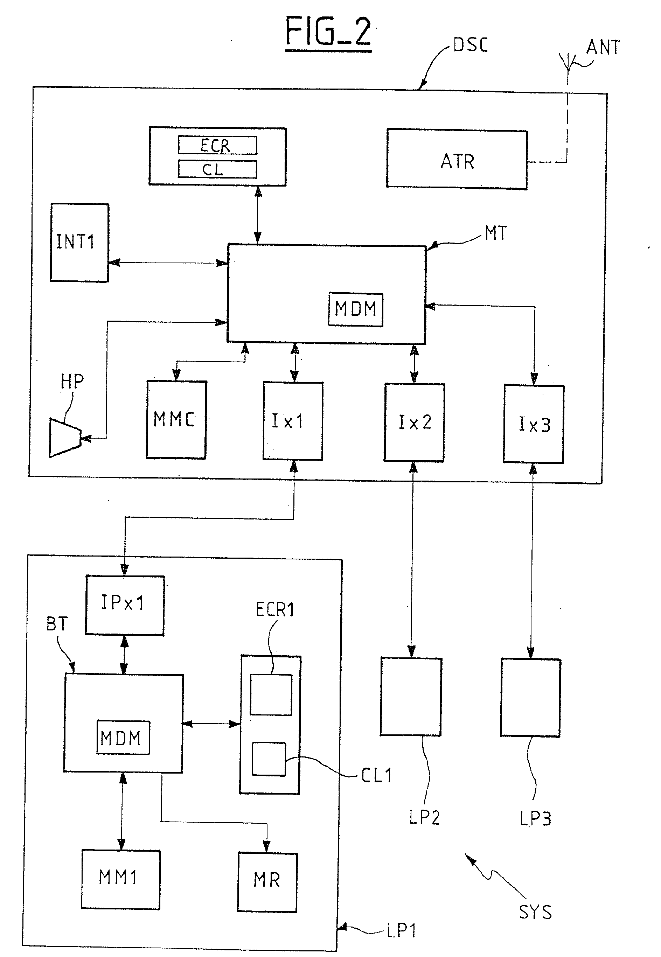

Avant de se référer plus particulièrement à la figure 2, on rappelle ici, ce qui est bien connu de l'homme du métier, que le format MP3 (MPEG-1 Audio Layer 3) est un format de fichier son comprimé par perte de données. Il est défini par les normes IS 11172-3 et IS 13818-3 de l'ISO/IEC et il est recommandé par le groupe de travail MPEG (Moving Pictures Experts Group). L'intérêt principal de ce format est d'atteindre un taux de compression important des fichiers sons sans que cela n'altère la qualité sonore. La différence entre le son original d'un disque audio et le son de ce même disque audio qu'on a comprimé en format MP3 est inaudible par l'oreille humaine, et comme le rapport de compression est généralement de l'ordre de 1:12, les fichiers obtenus sont de taille tout à fait raisonnable. Ainsi, on obtient des tailles de fichiers de l'ordre de 1 Mo pour une minute de son qualité CD audio (16 bits, 44.1 KHz, stéréo).

Ainsi, à l'aide d'un format MP3, il est possible de stocker facilement 150 morceaux de musique, soit près de 12 albums sur un seul CD audio.

Sur la figure 2, on voit que le dispositif central DSC comporte une première interface d'entrée INT1 capable de recevoir des fichiers numériques comprimés au format MP3 correspondant à des morceaux musicaux.

A titre indicatif, les fichiers peuvent être téléchargés via une connexion Internet directe (véhicule multimédia) ou via un téléchargement d'un micro-ordinateur sur une carte-mémoire. L'homme du métier saura adapter la structure de l'interface d'entrée INT1 en fonction du mode de réception des fichiers numériques.

Le lecteur enregistreur MP3 comporte, outre l'interface INT1, un moyen de mémoire central MMC, capable de stocker les différents fichiers numériques délivrés par l'interface d'entrée INT1. Il comporte également un clavier numérique CL et un écran ECR disposés sur une façade du dispositif à proximité du conducteur.

Il est prévu également des moyens de restitution sonore, tels que des haut-parleurs HP et plusieurs interfaces auxiliaires IX1, IX2, IX3, respectivement reliés aux différents lecteurs périphériques LP1, LP2, LP3.

Le lecteur enregistreur MP3 comporte, outre ces moyens, des moyens de traitement MT, par exemple réalisés de façon logicielle au sein d'un microprocesseur. Ces moyens MT sont connectés aux différents éléments du lecteur enregistreur et comportent notamment des moyens de décompression de fichiers MDM.

Par ailleurs, outre le lecteur enregistreur, le dispositif central DSC comporte des moyens classiques formant autoradio ATR reliés à l'antenne ANT du véhicule.

Chaque lecteur périphérique, par exemple le lecteur périphérique LP1, comporte une interface périphérique IPX1 coopérant avec l'interface auxiliaire correspondante IX1, un clavier numérique CL1, un écran ECR1, un moyen de mémoire MM1 capable de stocker les morceaux musicaux en format MP3, une interface de restitution sonore MR avec le passager correspondant, par exemple des écouteurs en forme d'oreillettes, et un bloc de traitement BT (par exemple un processeur) capable de coopérer avec les différents éléments précités du périphérique et comportant notamment des moyens de décompression MDM.

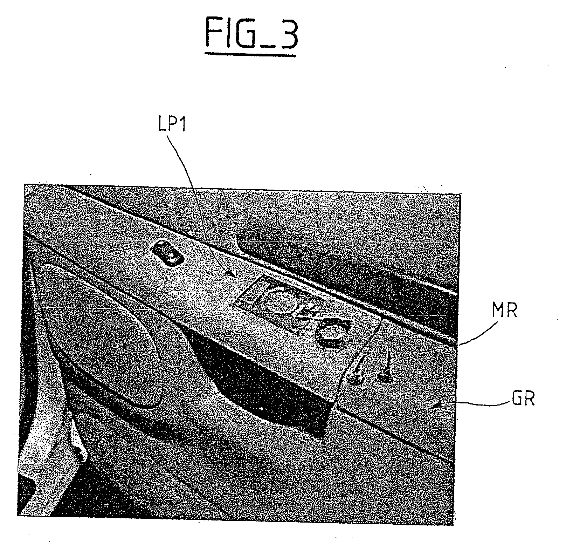

Comme illustré sur la figure 3, un lecteur périphérique LP1 peut être inséré dans une garniture GR d'une porte. On voit par ailleurs sur la figure 3, une illustration de l'aspect extérieur de ce lecteur périphérique comportant l'écran, le clavier et des écouteurs en forme d'oreillettes MR.

Les lecteurs périphériques LPi ont une taille comparable à celle d'un baladeur et permettent au passager de sélectionner les morceaux de musique ainsi que les albums qu'il désire écouter, d'agir sur le volume, les basses, etc. Le moyen de mémoire MM1, par exemple une carte-mémoire, permet d'enregistrer provisoirement les sélections musicales faites par le passager et téléchargées depuis le dispositif centrai DSC.

Ainsi, les passagers écoutent leur musique au moyen d'oreillettes, tandis que le conducteur le fait directement à l'aide du dispositif central DSC au moyen des haut-parleurs situés à sa proximité.

L'invention permet donc une personnalisation de l'habitacle. En effet, avec ce système, chaque occupant du véhicule peut écouter les musiques qu'il désire et voyager tranquillement sans être importuné par les goûts musicaux de ces voisins.

Par ailleurs, un plus grand nombre de musiques peut être disponible dans l'automobile en raison d'une absence de support physique du type lecteur de CD ou lecteur de cassettes.

## Revendications

1. Système audio embarqué pour véhicule automobile, **caractérisé par le fait qu'**il comporte un dispositif central (DSC) de type autoradio disposé au voisinage de la place conducteur et incorporant en outre un lecteur/enregistreur capable de traiter des fichiers audio comprimés au format MP3, ainsi que plusieurs lecteurs périphériques (LPi) capables de traiter des fichiers audio comprimés au format MP3, coopérant avec le dispositif central et disposés à des endroits prédéterminés dans le véhicule au voisinage des places passager.

2. Système selon la revendication 1, **caractérisé par le fait que** le le lecteur/enregistreur du dispositif central comporte une première interface d'entrée (INT1) capable de recevoir des fichiers numériques comprimés au format MP3 correspondant à des morceaux musicaux, un moyen de mémoire central (MMC) capable de stocker les différents fichiers numériques délivrés par ladite première interface d'entrée, un clavier numérique (CL), un écran (ECR), des moyens de restitution sonore (MP), plusieurs interfaces auxiliaires (IXi) respectivement reliées aux différents lecteurs périphériques, des moyens de traitement (MT) connectés à la première interface d'entrée, aux différentes interfaces auxiliaires, au moyen de mémoire central, à l'écran, au clavier, et aux moyens de restitution sonore, et comportant des moyens de décompression de fichier (MDM),
et **par le fait que** chaque lecteur périphérique (LP1) comporte une interface périphérique (IPX1) coopérant avec l'interface auxiliaire correspondante (1X1), un clavier numérique (CL1), un écran (ECR1), un moyen de mémoire (MM1) capable de stocker des morceaux musicaux en format MP3, une interface de restitution sonore avec le passager correspondant (MR), et un bloc de traitement (BT) capable de coopérer avec les différents éléments précités du périphérique et comportant des moyens de décompression (MDM).

3. Système selon la revendication 2, **caractérisé par le fait que** le moyen de restitution sonore de chaque lecteur périphérique comporte des oreillettes (MR).

4. Système selon l'une des revendications précédentes, **caractérisé par le fait que** les lecteurs périphériques (LPi) sont destinés à être incorporés dans les garnitures des portes passagers.

5. Système selon l'une des revendications 1 à 3, **caractérisé par le fait que** chaque lecteur périphérique (LPi) est destiné à être incorporé dans le plafond du véhicule situé juste au dessus du passager.

6. Système selon l'une des revendications 1 à 3, **caractérisé par le fait que** les lecteurs périphériques associés aux passagers arrière du véhicule sont destinés à être incorporés dans les sièges du conducteur et du passager avant.

7. Système selon l'une des revendications précédentes, **caractérisé par le fait que** chaque lecteur périphérique est amovible et comporte un dispositif de sécurité verrouillant le lecteur dans son logement tant que le contact moteur n'est pas mis.
